# EUROPÄISCHE PATENTSCHRIFT

(11) **EP 1 068 092 B1**
(45) Veröffentlichungstag und Bekanntmachung des Hinweises auf die Patenterteilung: **28.11.2001**
(21) Anmeldenummer: 99913317.6
(22) Anmeldetag: 19.03.1999
(51) Int. Cl.: B60K 11/08

(54) **BODENVERDICHTUNGSMASCHINE**
ROAD ROLLER
COMPACTEUR ROUTIER

(30) Priorität: 26.03.1998 DE 29805539 U
(43) Veröffentlichungstag der Anmeldung: 17.01.2001
(73) Patentinhaber: Vibromax Bodenverdichtungsmaschinen GmbH, 06466 Gatersleben (DE)
(72) Erfinder: LÖBERT, Horst, D-06449 Aschersleben (DE); KEHLER, Jörg, D-06466 Gatersleben (DE)
(74) Vertreter: Preissner, Nicolaus, Dipl.-Ing.
(86) Internationale Anmeldenummer: EP9902350
(87) Internationale Veröffentlichungsnummer: WO9948716

(56) Entgegenhaltungen:
- DE-U- 29 805 539
- GB-A- 2 108 062
- US-A- 3 970 161
- US-A- 4 606 422
- US-A- 5 692 467
- PATENT ABSTRACTS OF JAPAN vol. 098, no. 005, 30. April 1998 & JP 10 014354 A (YANMAR AGRICULT EQUIP CO LTD), 20. Januar 1998

## Beschreibung

Die vorliegende Erfindung betrifft eine Bodenverdichtungsmaschine mit einem Rahmen, einem gekapselten Antriebsmotor und einem Kühler, der von Kühlluft durchströmt wird. Eine solche gattungsgemäße Maschine ist aus der US 5 692 467 bekannt.

Derartige Bodenverdichtungsmaschinen sind bekannt. Sie werden insbesondere im Straßenbau auf Baustellen eingesetzt. Der Kühler dient hierbei zur Kühlung des Antriebsmotors sowie eines üblicherweise installierten Hydrauliksystems. Bei den bekannten Bodenverdichtungsmaschinen wird die Kühlluft von der Seite, von vorn und/oder von unten angesaugt, durch den Kühler geführt und anschließend ausgestoßen. Zur Luftumwälzung dient im Regelfall ein Lüfterblatt, das am Kühler angebracht ist.

Bei den bekannten Bodenverdichtungsmaschinen wird häufig verschmutzte und staubbeladene Kühlluft angesaugt. Die Staubbeladung ist insbesondere auf Baustellen relativ hoch. Der in der Kühlluft enthaltene Staub setzt sich im Motorraum und am Kühler ab. Hierdurch wird der Motorraum unnötig verschmutzt, während gleichzeitig die Kühlwirkung des Kühlers verringert wird. Auf Grund der Verschmutzung können darüber hinaus bei der Wartung der Hydraulikeinheiten Schwierigkeiten entstehen, da eine Verschmutzung der Hydraulikflüssigkeit mit Staub vermieden werden muß.

Die vorliegende Erfindung hat sich daher die Aufgabe gestellt, bei einer derartigen Bodenverdichtungsmaschine eine Zufuhr von frischer und staubfreier Kühlluft zu ermöglichen.

Erfindungsgemäß wird diese Aufgabe bei einer Bodenverdichtungsmaschine der eingangs genannten Art dadurch gelöst, daß zum Leiten der Kühlluft eine den Antriebsmotor abdeckende Haube mit einem Lufteinlaß sowie Luftaustrittsöffnungen und ein getrenntes, den Kühler aufnehmendes Gehäuse vorgesehen sind, wobei die Haube und das Gehäuse luftleitend verbunden sind.

Diese Luftführung ermöglicht ein gezieltes Ansaugen und Ausstoßen der Kühlluft. Die Kühlluft wird durch den Lufteinlaß der Haube nur von oben her aus dem im wesentlichen staubfreien Bereich oberhalb der Bodenverdichtungsmaschine angesaugt, wobei ein Ansaugen von unten oder von der Seite unterbleibt. Die Kühlluft wird anschließend durch das Gehäuse und am Kühler vorbei in die Haube zurückgeleitet und durch die Luftaustrittsöffnungen der Haube ausgestoßen. Dieses Ausstoßen erfolgt bevorzugt in Richtung der Unterseite der Bodenverdichtungsmaschine, also entfernt von der Ansaugung. Hierdurch wird ein wiederholtes Zirkulieren der Kühlluft vermieden.

Mit der erfindungsgemäß vorgesehen Luftleiteinrichtung wird die Verschmutzung des Motorraums und des Kühlers wesentlich verringert. Die Kühlwirkung bleibt für große Zeiträume im wesentlichen unverändert. Gleichzeitg gestaltet sich die Wartung der Hydraulikeinheiten einfacher, da der Motorraum im wesentlichen staubfrei bleibt.

Vorteilhafte Weiterbildungen und Ausgestaltungen der Erfindung gehen aus den Unteransprüchen hervor.

Bevorzugt weist die Haube einen Aufsatz mit dem Lufteinlaß auf, der über eine Öffnung mit dem Gehäuse für die Aufnahme des Kühlers in luftleitender Verbindung steht. Der Aufsatz ist gegenüber dem von der Haube abgedeckten Motorraum luftdicht abgeschlossen. Diese Konstruktion stellt sicher, daß die angesaugte Kühlluft nicht auf beliebigem Weg durch die Haube geführt wird, sondern von dem Aufsatz der Haube in das Gehäuse und anschließend zum Kühler geführt wird. Der gesamte angesaugte Luftmassenstrom wird somit für die Kühlung genutzt.

Die Haube weist bevorzugt eine Einlaßöffnung für die Kühlluft auf, der eine Auslaßöffnung am Gehäuse zugeordnet ist. Die Kühlluft wird von außen aus der Umgebung in den Aufsatz der Haube gesaugt. Aus dem Aufsatz gelangt die Kühlluft durch eine Öffnung in das Gehäuse, wird dort umgelenkt und durchströmt den Kühler. Anschließend tritt die Kühlluft durch die Auslaßöffnung des Gehäuses und die Einlaßöffnung wieder in die Haube ein. Die Kühlluft wird somit gezielt angesaugt, geleitet und ausgestoßen.

In vorteilhafter Ausgestaltung sind unterhalb der Haube an dem Rahmen Seitenwände zum Leiten der Kühlluft angebracht, deren Höhe geringer ist als die der Haube. Stromabwärts des Kühlers wird der Kühlluftstrom von den Seitenwänden innerhalb der Haube geteilt. Ein Teil der Kühlluft wird sofort ausgestoßen, während ein weiterer Teil noch zwischen den Seitenwänden geführt und erst mit Verzögerung ausgestoßen wird. Die Kühlluft kann durch den Zwischenraum zwischen Seitenwänden und Haube zu den Luftaustrittsöffnungen gelangen. Durch diese Konstruktion wird die Kühlwirkung erhöht. Gleichzeitig wird durch die Kapselung des Antriebsmotors über die Haube, das Gehäuse und die Seitenwände eine Geräuschminderung erreicht.

Vorteilhaft weist die Haube Seitenbleche mit Ausschnitten zum Auslaß der Kühlluft auf. Diese Ausschnitte stellen definierte Luftaustrittsöffnungen für die Kühlluft bereit. Ein unerwünschtes Zirkulieren der Kühlluft, ein Verbleiben im Motorraum oder ein Austritt an einer unerwünschten Stelle, insbesondere in der Nähe des Lufteinlasses, wird zuverlässig vermieden.

Bevorzugt sind die Seitenwände beabstandet zu den Seitenblechen angeordnet und überdecken die Austrittsöffnungen der Seitenbleche. Der Antriebsmotor wird durch die Seitenwände gekapselt, so daß eine Geräuschminderung erreicht wird. Die Seitenwände schützen den Antriebsmotor auch vor durch die Ausschnitte eindringenden Schmutz und Staub.

In weiterer vorteilhafter Ausgestaltung erstrecken sich die Seitenwände vom Kühler bis zum Ende der Haube. Hierdurch wird der gesamte Motorraum durch die Seitenwände seitlich gekapselt, so daß eine weitere Geräuschminderung eintritt. Gleichzeitig wird das Eindringen aufgewirbelter, staubbeladener Luft in den Motorraum durch die Seitenwände nochmals zumindest erschwert.

Bevorzugt nimmt die Höhe der Seitenwände vom Kühler ausgehend ab.
Die Seitenwände sind hierbei etwa trapezförmig ausgebildet und dekken die Ausschnitte der Seitenbleche der Haube zur Seite hin ab. Der Motorraum wird zuverlässig gegen Verschmutzung geschützt. Die Höhenverringerung der Seitenwände erlaubt bei hochgeklappter Haube einen guten Zugang zum Antriebsmotor, so daß Wartungsarbeiten einfacher durchgeführt werden können.

Vorteilhaft besteht der Lufteinlaß aus in dem Aufsatz der Haube ausgebildeten Schlitzen. Diese Schlitze sind rasch und kostengünstig zu fertigen. Alternativ ist die Verwendung eines Lochgitters möglich.

Gemäß einer bevorzugten Weiterbildung der Erfindung ist die Haube verschwenkbar an einem Rahmen der Bodenverdichtungsmaschine gelagert. Das den Kühler aufnehmende Gehäuse ist starr an diesem Rahmen befestigt. Für Wartungsarbeiten kann die Haube verschwenkt werden, so daß der Antribesmotor, der Kühler und die Hydraulikeinheiten gut zugänglich sind. Nach Abschluß der Wartungsarbeiten wird die Haube wieder geschlossen. Die erfindungsgemäße Luftleiteinrichtung ist dann sofort ohne weitere Handgriffe wieder einsatzfähig.

Nachfolgend wird die Erfindung anhand eines Ausführungsbeispiels näher erläutert, das in schematischer Weise in der Zeichnung dargestellt ist. Dabei zeigt:
- Figur 1: eine Seitenansicht einer Bodenverdichtungsmaschine mit der erfindungsgemäßen Luftleiteinrichtung;
- Figur 2: eine schematische perspektivische Ansicht der erfindungsgemäßen Luftleiteinrichtung;
- Figur 3: einen Längsschnitt durch die erfindungsgemäße Luftleiteinrichtung; und
- Figur 4: einen Schnitt längs der Linie IV-IV in Figur 3.

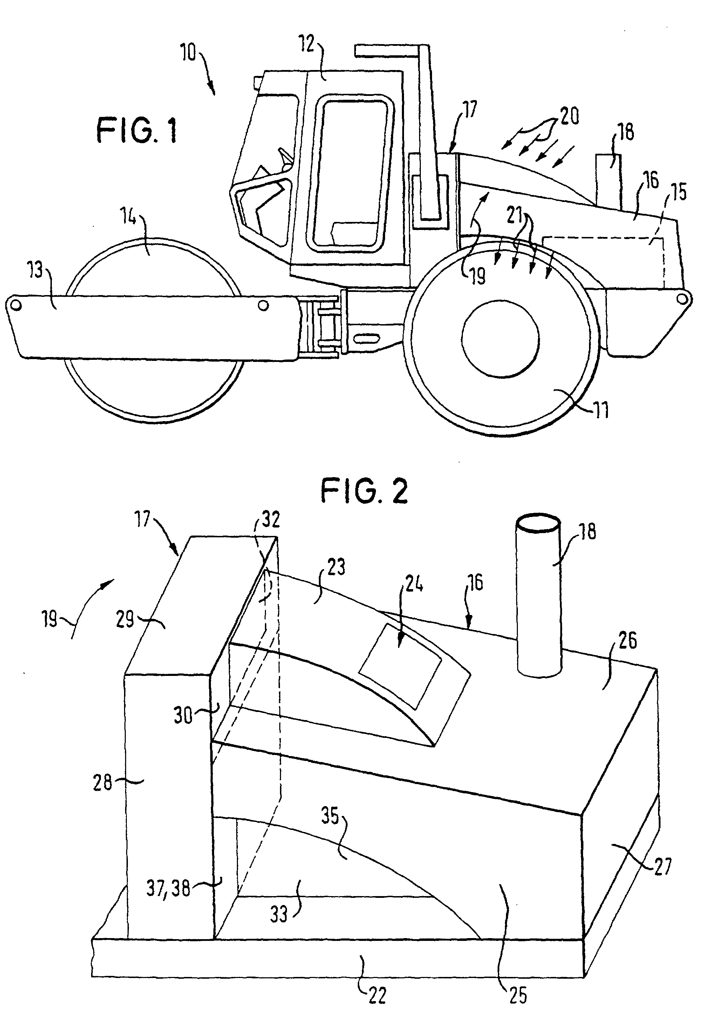

In Figur 1 ist eine Bodenverdichtungsmaschine 10 mit zwei Antriebsrädern 11 sowie einer Kabine 12 dargestellt. Die Bodenverdichtungsmaschine 10 weist einen Ausleger 13 auf, an dem eine Walze 14 drehbar befestigt ist. Zum Antrieb ist ein Antriebsmotor 15 vorgesehen, der von einer Haube 16 überdeckt ist. Zwischen der Haube 16 und der Kabine 12 ist ein Gehäuse 17 angeordnet. Die Haube 16 weist eine Hülle 18 auf, die einen nicht näher dargestellten Auspuff des Antriebsmotors 15 umgibt und kann in Pfeilrichtung 19 verschwenkt und in Gegenrichtung hierzu geschlossen werden. Hierdurch werden Wartungsarbeiten am Antriebsmotor 15 erleichtert.

Die Kühlluft wird von oben her in Pfeilrichtung 20 angesaugt und nach unten im Bereich der Antriebsräder 11 in Pfeilrichtung 21 ausgestoßen. Das Ansaugen erfolgt somit in einem im wesentlichen staubfreien Bereich, während das Ausstoßen in einem staubbelasteten Bereich, entfernt von der Ansaugung, erfolgt.

In Figur 2 sind die Haube 16 sowie das Gehäuse 17 zusammen mit einem Rahmen 22 der Bodenverdichtungsmaschine 10 perspektivisch dargestellt. Die Haube 16 ist an dem Rahmen 22 in Pfeilrichtung 19 verschwenkbar angebracht, während das Gehäuse 17 unbeweglich an dem Rahmen 22 befestigt ist. Die Haube 16 ist mit einem Aufsatz 23 mit einem Lufteinlaß 24 versehen. Sie weist Seitenbleche 25, ein Deckblech 26 sowie ein Abschlußblech 27 auf. Die Seitenbleche 25 sind mit Ausschnitten 35 für den Austritt der Kühlluft versehen.

Das Gehäuse 17 weist zwei Seitenbleche 28 sowie ein Deckblech 29 auf und ist zur Haube 16 hin mit einem Vorderblech 30 versehen. Dieses Vorderblech 30 weist eine Öffnung 32 auf, die von der Größe her an den Aufsatz 23 der Haube 16 angepaßt ist. Das Vorderblech 30 erstreckt sich nicht über die gesamte Höhe des Gehäuses 17, sondern endet knapp unterhalb des Deckblechs 26 der Haube 16. Das Gehäuse 17 weist unterhalb des Vorderblechs 30 eine Auslaßöffnung 38 auf, die einer Einlaßöffnung 37 der Haube 16 zugeordnet ist.

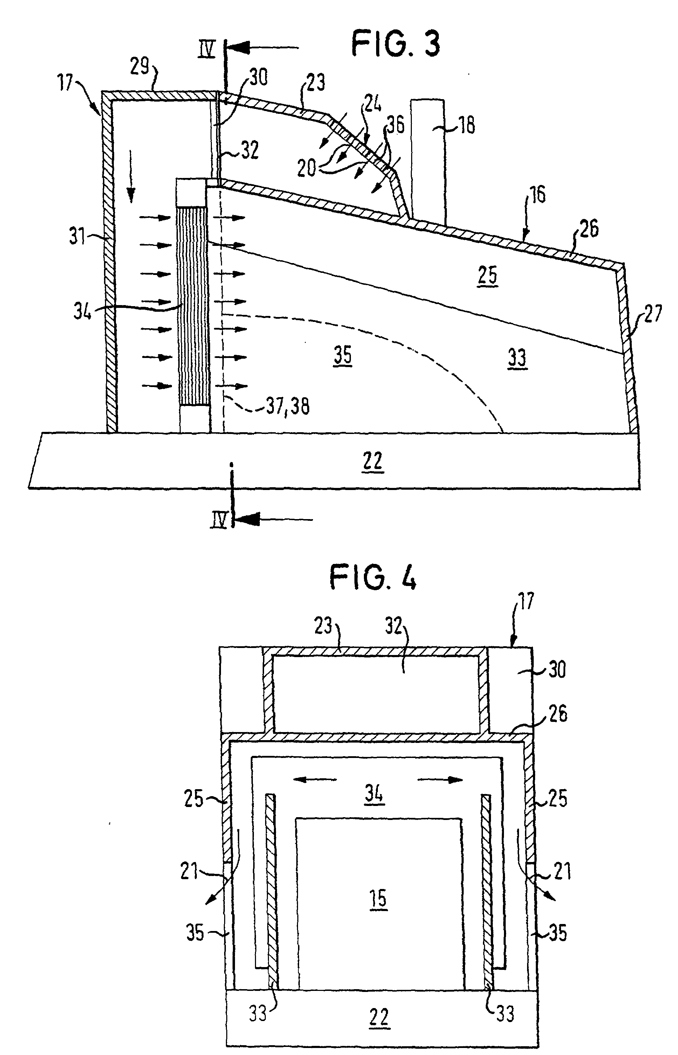

Zur Kabine 12 hin ist das Gehäuse 17 mit einem Rückenblech 31 (Figur 3) veschlossen. In dem Gehäuse 17 ist ein Kühler 34 (Figur 3) aufgenommen.

Unterhalb der Haube 16 sind auf dem Rahmen 22 zwei Seitenwände 33 beabstandet zu den Seitenblechen 25 angebracht. Diese Seitenwände 33 sind derart ausgebildet, daß sie die Ausschnitte 35 in den Seitenblechen 25 der Haube 16 überdecken. Der Antriebsmotor 15 wird durch die Seitenwände 33 und die Haube 16 gekapselt und vor Verschmutzung geschützt. Gleichzeitig ergibt sich eine Geräuschminderung.

Weitere konstruktive Einzelheiten und die Wirkungsweise der Luftleiteinrichtung werden anhand der Figuren 3 und 4 erläutert.

Der Kühler 34 erstreckt sich etwa bis zur Höhe der Haube 16. Die Seitenwände 33 verlaufen vom Kühler 34 bis zum Ende der Haube 16 und nehmen hierbei in der Höhe ab. Sie sind so ausgebildet, daß sie die Ausschnitte 35 in den Seitenblechen 25 der Haube 16 überdecken.

Gleichzeitig wird zwischen der Oberkante der Seitenwände 33 und dem Deckblech 26 der Haube 16 eine Durchtrittsmöglichkeit für Kühlluft geschaffen.

Alternativ können die Seitenwände 33 etwas kürzer ausgebildet sein, so daß sie etwa zwei Drittel des Abstands vom Kühler 34 bis zum Ende der Haube 16 überdecken. Die Ausschnitte 35 in den Seitenblechen 25 der Haube 16 werden auch in dieser Ausgestaltung noch von den Seitenwänden 33 überdeckt.

Der Aufsatz 23 ist an seinem dem Gehäuse 17 zugewandten Ende offen. Die Öffnung 32 im Deckblech 30 des Gehäuses 17 ist von der Größe her an den Aufsatz 23 angepaßt, so daß das Gehäuse 17 und der Aufsatz 23 luftleitend und im wesentlichen dicht verbunden sind. Seitlich des Aufsatzes 23 ist das gehäuse 17 durch das Deckblech 30 verschlossen. Der Aufsatz 23 ist gegenüber dem Motorraum luftdicht abgeschlossen und weist einen Lufteinlaß 24 aus mehreren Schlitzen 36 auf.

Die Kühlluft wird durch ein am Kühler 34 befestigtes Lüfterblatt in Pfeilrichtung 20 durch die Schlitze 36 angesaugt. Sie durchströmt den Aufsatz 23 der Haube 16 und tritt durch die Öffnung 32 in das Gehäuse 17 ein. Dort wird sie durch das Rückenblech 31 umgelenkt, durchströmt den Kühler 34 und tritt durch die Auslaßöffnung 38 und die Einlaßöffnung 37 erneut in die Haube 16 ein. Ein Teil der Kühlluft strömt danach sofort in Pfeilrichtung 21 durch die Ausschnitte 35 in den Seitenblechen 25 der Haube 16 aus. Ein weiterer Teil strömt entlang des Antriebsmotors 15 und bewirkt eine zusätzliche Kühlung. Dieser Anteil der Kühlluft gelangt durch den Zwischenraum zwischen der Oberkante der Seitenwände 33 und der Haube 16 zu den Ausschnitten 35 und tritt ebenfalls in Pfeilrichtung 21 aus.

Gemäß Figur 4 sind die Haube 16 und das Gehäuse 17 von gleicher Breite. Hierdurch wird ein optisch ansprechender Gesamteindruck erzielt. Gleichzeitig wird der zur Verfügung stehende Raum zwischen den Antriebsrädern 11 vollständig ausgenutzt. Der Kühler 34 erstreckt sich hie-bei über die gesamte Breite des Gehäuses 17, so daß eine große Kühlfläche zur Verfügung gestellt wird.

Die Erfindung gewährleistet bei Bodenverdichtungsmaschinen das Ansaugen von frischer und staubfreier Kühlluft. Die Verschmutzung des Motorraums wird verringert, und die Wartungsfreundlichkeit der Hydraulikeinheiten wird erhöht. Gleichzeitig bewirkt die Kapselung des Antriebsmotors eine Geräuschminderung.

## Patentansprüche

1. Bodenverdichtungsmaschine mit einem Rahmen (22), einem gekapselten Antriebsmotor (15) und einem Kühler (34), der von Kühlluft durchströmt wird, **dadurch gekennzeichnet, daß** zum Leiten der Kühlluft eine den Antriebsmotor (15) abdeckende Haube (16) mit einem Lufteinlaß (24) sowie Luftaustrittsöffnungen (35) und ein getrenntes, den Kühler (34) aufnehmendes Gehäuse (17) vorgesehen sind, wobei die Haube (16) und das Gehäuse (17) luftleitend verbunden sind.

2. Bodenverdichtungsmaschine nach Anspruch 1, **dadurch gekennzeichnet, daß** die Haube (16) einen Aufsatz (23) mit dem Lufteinlaß (24) aufweist, der über eine Öffnung (32) mit dem Gehäuse (17) für die Aufnahme des Kühlers (34) in luftleitender Verbindung steht.

3. Bodenverdichtungsmaschine nach Anspruch 1 oder 2, **dadurch gekennzeichnet, daß** die Haube (16) eine Einlaßöffnung (37) für die Kühlluft aufweist, der eine Auslaßöffnung (38) am Gehäuse (17) zugeordnet ist.

4. Bodenverdichtungsmaschine nach einem der Ansprüche 1 bis 3, **dadurch gekennzeichnet, daß** unterhalb der Haube (16) Seitenwände (33) zum Leiten der Kühlluft angeordnet sind, deren Höhe geringer ist als die der Haube (16).

5. Bodenverdichtungsmaschine nach den Ansprüchen 1 bis 4, **dadurch gekennzeichnet, daß** die Haube (16) Seitenbleche (25) mit Ausschnitten (35) als Luftaustrittsöffnungen zum Austreten der der Kühlluft aufweist.

6. Bodenverdichtungsmaschine nach Anspruch 4 und 5, **dadurch gekennzeichnet, daß** die Seitenwände (33) beabstandet zu den Seitenblechen (25) angeordnet sind und die Ausschnitte (35) der Seitenbelche (25) überdecken.

7. Bodenverdichtungsmaschine nach einem der Ansprüche 4 bis 6, **dadurch gekennzeichnet, daß** die Seitenwände (33) sich vom Kühler (34) bis zum Ende der Haube (16) erstrecken.

8. Bodenverdichtungsmaschine nach einem der Ansprüche 4 bis 7, **dadurch gekennzeichnet, daß** die Höhe der Seitenwände (33) vom Kühler (34) ausgehend abnimmt.

9. Bodenverdichtungsmaschine nach einem der Ansprüche 1 bis 8, **dadurch gekennzeichnet, daß** der Lufteinlaß (24) aus in dem Aufsatz (23) der Haube (16) ausgebildeten Schlitzen (36) besteht.

10. Bodenverdichtungsmaschine nach einem der Ansprüche 1 bis 9, **dadurch gekennzeichnet, daß** die Haube (16) verschwenkbar auf dem Rahmen (22) der Bodenverdichtungsmaschine (10) gelagert ist.

## Claims

1. A road roller comprising a chassis frame (22), an encapsulated engine (15) and a radiator (34) through which cooling air flows,
**characterized in that**
for guiding the cooling air a hood (16) covering said engine (15) incorporating an air intake (24) and air outlet openings (35) and a separate housing (17) accommodating said radiator (34) are provided, said hood (16) and said housing (17) being air communicatingly connected.

2. The road roller as set forth in claim 1,
**characterized in that** said hood (16) comprises a fitting (23) with said air intake (24) in an air-flow connection via an opening (32) with said housing (17) accommodating said radiator (34).

3. The road roller as set forth in claim 1 or 2,
**characterized in that** said hood (16) comprises an intake opening (37) for said cooling air which is assigned an exhaust opening (38) in said housing (17).

4. The road roller as set forth in any of the claims 1 to 3,
**characterized in that** sidewalls (33) are provided on said chassis frame (22) beneath said hood (16) for guiding said cooling air, the height of these sidewalls (33) being less than that of said hood (16).

5. The road roller as set forth in any of the claims 1 to 4,
**characterized in that** said hood (16) comprises sideplates (25) having cutouts (35), said cutouts (35) providing defined air outlet openings for said cooling air.

6. The road roller as set forth in claim 4 and 5,
**characterized in that**
said sidewalls (33) are arranged spaced away from said sideplates (25) and cover said cutouts (35) of said sideplates (25).

7. The road roller as set forth in any of the claims 4 to 6,
**characterized in that** said sidewalls (33) extend from said radiator (34) up to the end of said hood (16).

8. The road roller as set forth in any of the claims 4 to 7,
**characterized in that** the height of said sidewalls (33) diminishes as of said radiator (34).

9. The road roller as set forth in any of the claims 1 to 8,
**characterized in that** said air intake (24) comprises slots (36) machined in said fitting (23) of said hood (16)

10. The road roller as set forth in any of the claims 1 to 9,
**characterized in that** said hood (16) is swivel-mounted on said chassis frame (22) of said road roller (10).

## Revendications

1. Compacteur routier comportant un cadre (22), un moteur d'entraînement (15) encapsulé et un radiateur (34) qui est traversé par de l'air de refroidissement,
**caractérisé en ce que** pour le guidage de l'air de refroidissement sont prévus un capot (16), qui recouvre le moteur d'entraînement (15) et qui présente une admission d'air (24) ainsi que des ouvertures de sortie d'air (35), et un carter (17) séparé qui reçoit le radiateur (34), le capot (16) et le carter (17) étant reliés l'un à l'autre de manière à guider l'air.

2. Compacteur routier selon la revendication 1,
**caractérisé en ce que** le capot (16) comprend un talon (23) présentant l'admission d'air (24) qui est reliée de manière à guider l'air via une ouverture (32) au carter (17) pour recevoir le radiateur (34).

3. Compacteur routier selon l'une ou l'autre des revendications 1 et 2,
**caractérisé en ce que** le capot (16) présente une ouverture d'admission (37) pour l'air de refroidissement, à laquelle est associée une ouverture de sortie (38) sur le carter (17).

4. Compacteur routier selon l'une quelconque des revendications 1 à 3,
**caractérisé en ce que** des parois latérales (33) pour guider l'air de refroidissement sont agencées au-dessous du capot (16), dont la hauteur est inférieure à celle du capot (16).

5. Compacteur routier selon l'une quel conque des revendications 1 à 4,
**caractérisé en ce que** le capot (16) comprend des tôles latérales (25) présentant des encoches (35) à titre d'ouvertures de sortie d'air pour faire sortir l'air de refroidissement.

6. Compacteur routier selon l'une ou l'autre des revendications 4 et 5,
**caractérisé en ce que** les parois latérales (33) sont agencées à distance des tôles latérales (25) et recouvrent les encoches (35) des tôles latérales (25).

7. Compacteur routier selon l'une quelconque des revendications 4 à 6,
**caractérisé en ce que** les parois latérales (33) s'étendent depuis le radiateur (34) jusqu'à l'extrémité du capot (16).

8. Compacteur routier selon l'une quelconque des revendications 4 à 7,
**caractérisé en ce que** la hauteur des parois latérales (33) diminue en partant du radiateur (34).

9. Compacteur routier selon l'une quelconque des revendications 1 à 8,
**caractérisé en ce que** l'admission d'air (24) est constituée par des fentes (36) ménagées dans le talon (23) du capot (16).

10. Compacteur routier selon l'une quelconque des revendications 1 à 9,
**caractérisé en ce que** le capot (16) est monté en basculement sur le cadre (22) du compacteur routier (10).
